**Europäisches Patentamt**

(19) **European Patent Office**

**Office européen des brevets**

(11) Numéro de publication: **0 082 055**
**B1**

(12) **FASCICULE DE BREVET EUROPÉEN**

(45) Date de publication du fascicule du brevet:
04.02.87

(51) Int. Cl.⁴: **H 04 K 3/00,** H 04 B 7/26

(21) Numéro de dépôt: **82402219.8**

(22) Date de dépôt: **03.12.82**

(54) Procédé d'établissement des communications dans un réseau de postes émetteurs-récepteurs à sauts de fréquence, et poste destiné à la mise en oeuvre de ce procédé.

(30) Priorité: **15.12.81  FR 8123441**

(43) Date de publication de la demande:
**22.06.83 Bulletin 83/25**

(45) Mention de la délivrance du brevet:
**04.02.87 Bulletin 87/6**

(84) Etats contractants désignés:
**DE GB**

(56) Documents cité:
**DE-A-2 650 823**
**US-A-4 013 958**

(73) Titulaire: **THOMSON- CSF, 173, Boulevard Haussmann, F-75379 Paris Cedex 08 (FR)**

(72) Inventeur: **Rabain, Jacques, THOMSON- CSF SCPI 173, bld Haussmann, F-75379 Paris Cedex 08 (FR)**
Inventeur: **Adrian, Serge, THOMSON- CSF SCPI 173, bld Haussmann, F-75379 Paris Cedex 08 (FR)**

(74) Mandataire: **Turlèque, Clotilde, THOMSON- CSF SCPI 19, avenue de Messine, F-75008 Paris (FR)**

LIBER, STOCKHOLM 1987

## Description

L'invention se rapporte à un procédé d'établissement des communications dans un réseau de postes émetteurs-récepteurs fonctionnant suivant une procédure d'alternance, un saut de fréquence destiné à changer la fréquence de trafic étant réalisé à chaque alternat pour l'ensemble des postes en communication afin de protéger les communications des contre-mesures.

Le brevet US 4 013 958 décrit un réseau d'émetteurs-récepteurs fonctionnant suivant une procédure d'alternance, un changement de la fréquence de traffic étant réalisé à chaque alternat afin d'utiliser au mieux un nombre limité de fréquences. Chaque émetteur-récepteur en veille balaye périodiquement l'ensemble des fréquences prévues pour le traffic, afin de détecter celles qui sont occupées et détecter des signaux qui lui sont éventuellement adressés. Les fréquences sur lesquelles aucun signal n'est détecté pendant une durée fixée sont considérées comme libres et peuvent être choisies par l'émetteur-récepteur considéré, pour établir une communication.

Ce procédé a pour inconvénient que l'occupation de chaque fréquence est testée dans le voisinage immédiat de chaque émetteur-récepteur. Celui qui va établir une communication sur une fréquence ne peut pas savoir si celle-ci n'est pas occupée dans le voisinage de l'émetteur-récepteur destinataire de cette communication. Il est possible que le destinataire soit incapable de recevoir sur cette fréquence à cause d'un brouilleur de faible puissance mais très proche. La probabilité de ce phénomène augmente avec le nombre des postes destinataires. Cet inconvénient est donc particulièrement gênant pour un réseau de conférence.

Pour l'établissement des communications, la fréquence choisie doit être au préalable testée et trouvée libre par tous les récepteurs afin que cette fréquence puisse être utilisée comme fréquence de trafic pour la période correspondante de l'alternat, cette recherche de fréquence libre devant être effectuée à chaque phase de l'alternat. En effet, si les postes sont suffisamment éloignés les uns des autres, leur environnement électrique est différent et la conférence ne peut être complète que si la fréquence choisie pour la communication a été testée et trouvée libre au niveau de tous les récepteurs formant le réseau.

Cette prise de liaison suppose donc un échange d'informations préalable entre tous les postes du réseau qui doit être suffisamment bref pour être imperceptible à l'opérateur et permettre la recherche d'une nouvelle fréquence libre à chaque alternat.

L'invention a donc pour objet un procédé d'établissement des communications qui présente ces caractéristiques.

Suivant l'invention, un procédé d'établissement des communications dans un réseau conférence de postes émetteurs-récepteurs à sauts de fréquence communiquant en alternat, est principalement caractérisé en ce que, en position de veille, les postes en écoute suivent une même première loi de fréquence, dite loi de veille, variant par sauts d'une manière pseudo-aléatoire; en ce que, à chaque alternat, le poste en position d'appel établit une séquence d'appel formée de messages d'appel émis en diversité de fréquence sur les paliers de cette loi, de veille et est placé, à la fin de cette séquence d'appel, en écoute sur la fréquence possible de trafic correspondant au palier en cours d'une seconde loi de fréquences semblable pour tous les postes, variant par sauts d'une manière pseudo-aléatoire, et synchronisée avec la première, la durée des paliers de la seconde loi étant multiple de celle des paliers de la loi de veille; en ce que les postes en position de veille ayant détecté au moins partiellement la séquence d'appel sont également placés, à la fin de cette séquence, en écoute sur la même fréquence possible de trafic pendant un intervalle de test de durée $t_1$, un poste ayant détecté un signal à cette fréquence pendant cette durée $t_1$ émettant pendant un intervalle de durée $t_2$ un signal de brouillage à cette même fréquence à destination des autres postes du réseau pour indiquer l'occupation de la fréquence correspondante et un poste n'ayant pas détecté de signal prolongeant l'écoute pendant le même intervalle de durée $t_2$; et en ce que le poste appelant émet de telles séquences d'appel suivies de phases d'écoute sur des paliers de la seconde loi de fréquences jusqu'à ce qu'une fréquence possible soit libre, la communication étant établie pour le poste apperant par l'émission à cette fréquence de trafic et pour les postes appelés par l'écoute à cette même fréquence lorsqu'à la fin d'un intervalle de durée $t_2$, aucun poste n'a détecté de signal.

L'invention à également pour objet un poste émetteur-récepteur destiné à la mise en oeuvre du procédé d'établissement des communications décrit ci-dessus.

L'invention sera mieux comprise et d'autres caractéristiques apparaîtront à l'aide de la description qui suit en référence aux figures annexées.

- La figure 1 est un diagramme illustrant le procédé suivant l'invention;

- la figure 2 est un organigramme de la séquence mise en oeuvre par un poste en position d'appel dans le procédé suivant l'invention;

- la figure 3 est un organigramme de la séquence mise en oeuvre par un poste en état de veille dans le procédé suivant l'invention;

- la figure 4 représente schématiquement un poste destiné à la mise en oeuvre du procédé suivant l'invention.

Le procédé d'établissement des communications suivant l'invention est mis en oeuvre dans un réseau conférence protégé des contremesures de la façon suivante:

- une fréquence de trafic n'est utilisée que pendant une période d'alternat;

- chaque fréquence est choisie à partir d'une loi de fréquences pseudo-aléatoire, dite loi de recherche de fréquence libre $L_R$, générée simultanement dans tous les postes du réseau;

- les messages d'appel générés par un poste appelant pour l'établissement d'une communication sont émis en diversité de fréquence à partir d'une autre loi de fréquences pseudo-aléatoire, dite loi de veille $L_V$, générée simultanément dans tous les postes; ainsi la fréquence de trafic n'est pas utilisée avant le début de la communication utile.

Tous les postes émetteurs-récepteurs du réseau possèdent une horloge locale et ces postes génèrent la même loi de veille $L_V$ à variation de fréquence pseudo-aléatoire pour la génération des messages d'appel. La durée des paliers de fréquence, soit $T_V$, de cette loi de veille est compatible avec le décalage temporel qui peut exister entre les horloges des différents postes du réseau. En plus de cette loi de veille, les postes du réseau génèrent la même loi de variation de fréquence $L_R$, synchronisée avec la loi de veille, à partir de laquelle un poste appelant recherche une fréquence libre. La durée des paliers de la loi de recherche de fréquence libre est multiple de la durée des paliers de la loi de veille: soit $T_R = NT_V$ cette durée.

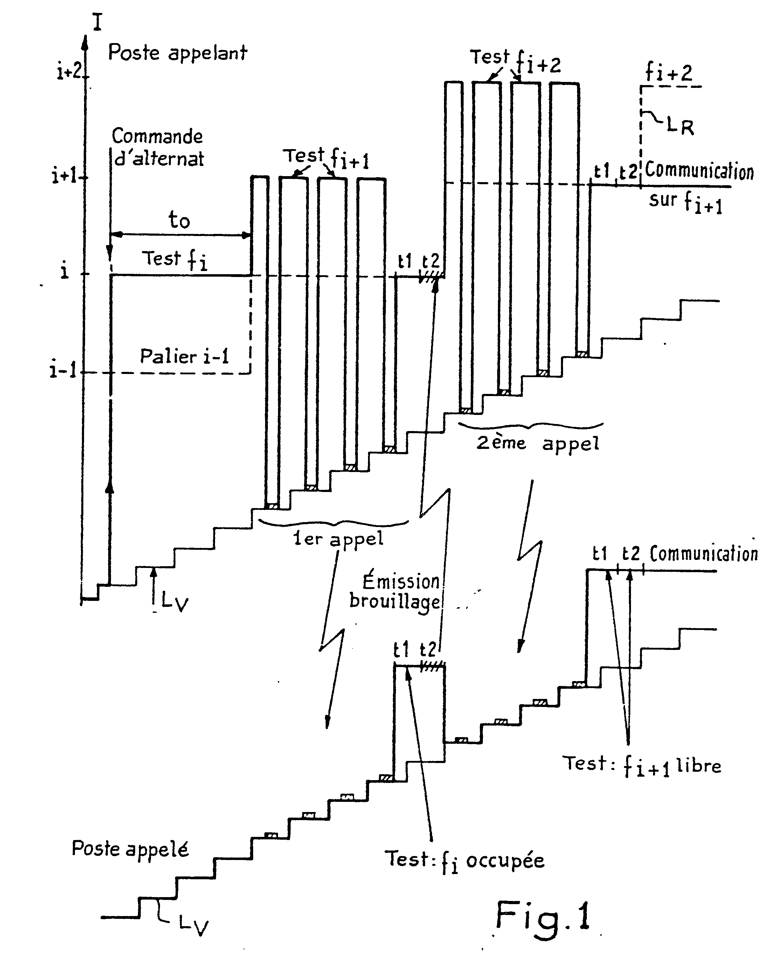

La figure 1 représente les lois de veille synchronisées de deux postes émetteurs-récepteurs, l'un en position de poste appelant et l'autre en position d'écoute, dit poste appelé pour la suite de la description; cette représentation indique le rang I des paliers de fréquences en fonction du temps et non les valeurs $F_1$ (aléatoires) des fréquences correspondantes. Sur cette figure 1 est également représentée, en pointillés, la loi de recherche de fréquence libre, $L_R$ du poste appelant; la fréquence à utiliser pour une liaison est désignée de façon implicite par l'instant de prise de la liaison du fait de la synchronisation des deux lois.

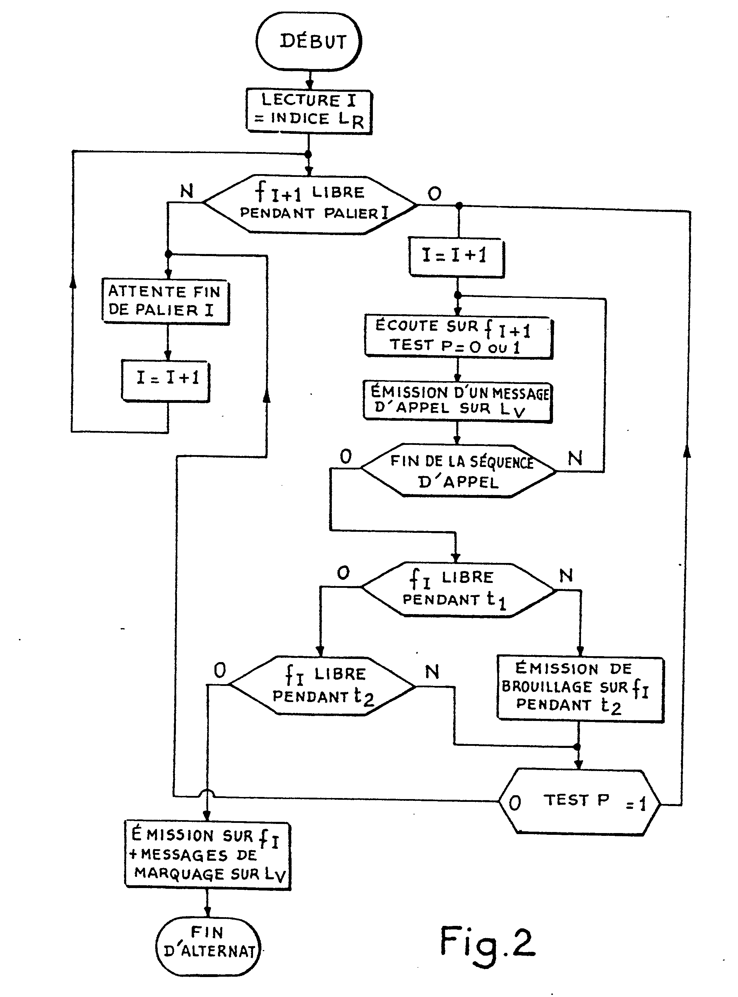

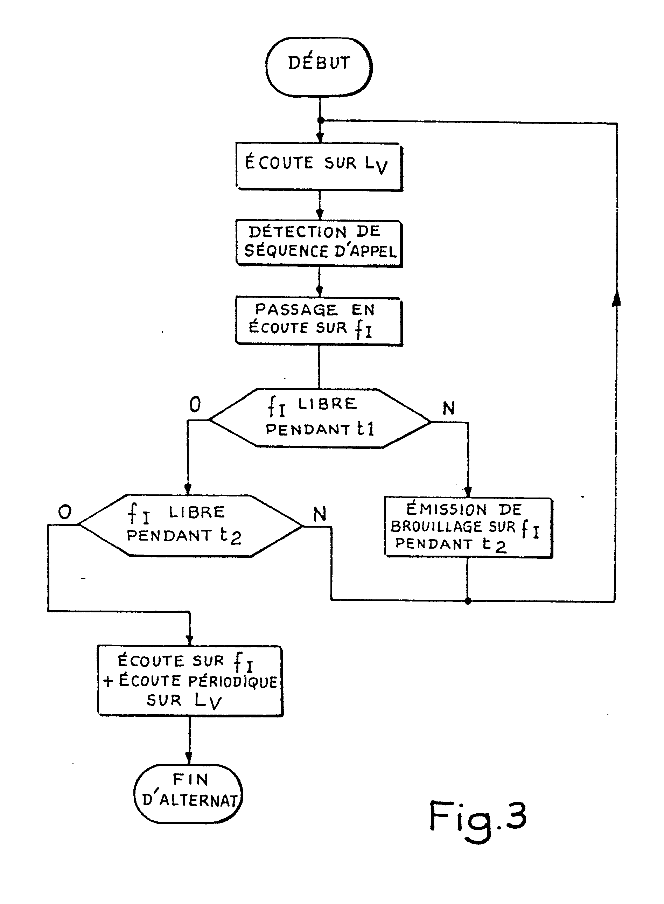

Le procédé d'établissement des communications à partir de ces deux lois est décrit ci-dessous en référence aux figures 2 et 3 représentant les étapes de la mise en oeuvré du procédé suivant l'invention respectivement dans un poste en position d'appel et dans un poste en état de veille.

En l'absence de communication, chaque poste du réseau est en état de veille, à l'écoute sur sa loi de veille $L_V$.

Lorsque l'utilisateur d'un poste souhaite établir une communication dans le réseau, il place le poste en position de poste appelant. Cette commande d'alternat intervient sur la figure 1 pendant le palier d'indice $I = i-l$ de la loi de recherche $L_R$ du poste appelant.

A cet instant, le poste quitte sa loi de veille $L_V$ et se place dans des conditions d'écoute à la fréquence $f_{l+1}$ ($f_i$ sur la figure 1) du palier suivant de la loi de fréquence $L_R$, et cela jusqu'à la fin du palier correspondant d'indice I de cette loi de recherche de fréquence libre, c'est-à-dire pendant une, durée $t_0$. Le poste appelant effectue par cette écoute un test de présomption de liberté de la fréquence $f_{l+1}$ du palier suivant de la loi de fréquence $L_R$.

Si en étant accordé sur cette fréquence $f_{l+1}$, le poste appelant reçoit un signal, le résultat du test de présomption de liberté à la fréquence $f_{l+1}$ est négatif, et, le poste se place, pendant le palier suivant $(I = I+1)$ dans des conditions d'écoute à la fréquence associée au palier suivant et cette opération est répétée tant que les fréquences testées ne sont pas trouvees libres au niveau du poste appelant.

Par contre, si, en étant accordé sur cette fréquence $f_{l+1}$, pendant un palier d'indice l, le poste appelant ne reçoit rien, le résultat du test de présomption de liberté de la fréquence $f_{l+1}$ est déclaré positif. Le poste appelant émet alors, sur le palier suivant $(I = I+1)$ de la loi $L_R$ une séquence d'appel formée d'une suite de M messages d'appel à des fréquences correspondant aux paliers successifs de sa loi de veille $L_V$. $M = N-1$ dans l'exemple de la figure 1. Les messages d'appel sont centrés par rapport aux paliers de la loi de veille et leur durée n'est qu'une fraction de la durée des paliers, de cette loi de veille $L_V$. Entre deux messages d'appel successifs, le poste appelant se place en position d'écoute. Pendant ces intervalles, l'écoute est réalisée sur la fréquence du palier d'indice suivant de la loi de fréquence $L_R$ ceci en prévision du réjet éventuel par l'un des postes appelés de la fréquence $f_l$.

Un index dit "TEST P" sur l'organigramme de la figure 2 est mis à jour à chaque test de présomption de liberté dans les intervalles entre les messages d'appel et prend une valeur 1 ou 0 suivant que la fréquence suivante $f_{l+1}$ est présumée libre ou non.

A la fin d'une séquence d'appel, le poste appelant et tous les postes du réseau qui ont détecté le message d'appel se mettent en position d'ecoute sur la fréquence $f_l$ correspondant au palier d'indice I, en cours, de la loi de recherche de fréquence libre.

A partir de cet instant et pour une duré prédéterminée $t_1$, chaque poste à l'écoute sur cette fréquence $f_l$ teste l'environnement pour savoir si la fréquence $f_l$ est libre ou non à son niveau. A la fin de cette durée $t_1$, si un poste présume que la fréquence est libre, n'ayant rien reçu sur cette fréquence, le test correspondant est prolongé d'une durée $t_2$. Si au contraire un message est détecté sur cette fréquence f la fréquence est occupée et le poste ayant ainsi détecté ce message émet pendant la durée $t_2$ un signal de brouillage à la fréquence $f_l$.

De ce fait, les postes qui étaient en écoute pendant cette même durée $t_2$, n'ayant pas détecté de message pendant la durée $t_1$, détectent alors le message de brouillage et en déduisent que la fréquence n'est pas utilisable pour l'établissement de la communication.

A la fin de cette phase, lorsque la première fréquence testée $f_l$ n'est pas libre, les postes appelés se replacent en écoute sur leur loi de veille $L_V$ pour attendre un nouveau message d'appel émis par le poste appelant.

Le poste qui avait l'initiative de l'appel a comme les autres postes déterminé que la fréquence était occupée. De plus, le test qu'il a effectué entre les messages d'appel sur la fréquence suivante du prochain palier de la loi de fréquence $L_R$ lui a permis de déterminer si cette fréquence était libre ou non (TEST P étant respectivement égal à 1 ou 0). Le poste appelant émet alors dans l'hypothèse où la fréquence $f_{l+1}$ est présumée libre, une seconde séquence d'appel pendant le palier suivant de la loi de fréquence $L_R$, de la même manière que précédemment, et effectue un test de présomption de liberté, de la fréquence associée au prochain palier de la loi de fréquence $L_R$ dans les intervalles entre les messages d'appel.

Si, à la fin de la phase formée par cette seconde séquence d'appel et la phase d'écoute à la fréquence $f_l$ correspondant au palier en cours de la loi $L_R$, aucun poste appelé n'a émis l'émission de brouillage à cette frequence, la communication est alors établie pour tous les postes sur cette fréquence $f_l$. Tous les postes restent alors sur cette fréquence pendant la durée d'une période de l'alternat.

Dans l'hypothèse où le test de presomption de liberté effectué entre les messages d'appel a permis de déterminer que la frequence suivante était occupée, (TEST P = 0), le poste appelant n'émet pas de séquence d'appel, sur le palier suivant de la loi de recherche de fréquence libre mais réalise pendant ce palier un test de présomption de liberté continu sur la fréquence correspondant au prochain palier, comme dans la phase initiale.

Dans l'exemple représenté sur la figure 1, les tests de présomption de liberté des fréquences successives ont été supposés positifs. Par contre, le test d'occupation de fréquence suivant la première séquence d'appel a été supposé négatif, le poste appelé ayant détecté un signal sur la fréquence correspondante et ayant émis un signal de brouillage à cette même fréquence. Ce signal de brouillage est reçu par le poste appelant pendant la durée $t_2$. La seconde séquence d'appel est alors emise par le poste appelant et, le test d'occupation qui suit étant positif, la communication est établie à la fréquence correspondante.

Pour obtenir une sécurité plus grande dans les communications, tous les postes, appelant et appelés, quittent périodiquement pendant la communication la fréquence établie respectivement pour émettre et écouter des messages de marquage positionnés de la même manière que les messages d'appel sur les paliers de la loi de veille. Quand un poste appelé ne détecte pas les messages de marquage, cela signifie que la communication est terminée ou que la liaison a été brouillée, dans ce cas le poste se replace sur sa loi de veille. L'émission de ces marquages permet également de confirmer ou d'infirmer l'interprétation des signaux de brouillage pendant la prise de communication.

Il a été indiqué ci-dessus que la durée des paliers de la loi de veille générée est compatible avec le décalage temporel susceptible d'exister entre les horloges des différents postes du réseau. En cas de silence prolongé du réseau, il est possible de mettre en oeuvre un procédé de synchronisation préalable des horloges des différents postes à partir de lois de vielle dont les durées de paliers évoluent en fonction de la durée de silence du réseau. L'établissement d'une communication est alors réalisé après cette synchronisation.

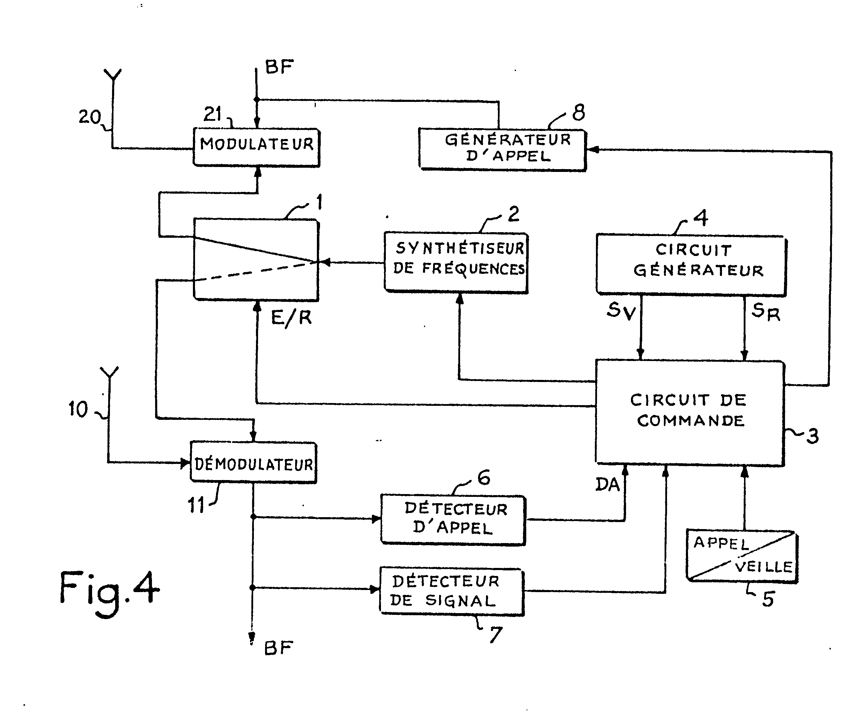

Un poste émetteur-récepteur destiné à la mise en oeuvre du procédé d'établissement des communications décrit ci-dessus a été représenté schématiquement sur la figure 4.

Pour la réception, le poste comporte une antenne de réception 10 reliée à un démodulateur 11 ayant une entrée de signal porteur et une sortie de signal BF démodulé. L'entrée de signal porteur est reliée à la première sortie d'un commutateur d'émission-réception 1 ayant une entrée de signal reliée à la sortie d'un synthétiseur de fréquences 2, et une entrée de commande d'émission/réception E/R reliée à une sortie d'un circuit de commande 3.

Pour l'émission, le poste comporte un modulateur, 21, dont l'entrée de signal reçoit un signal BF à émettre et dont l'entrée de signal porteur est reliée à la seconde sortie du commutateur 1. La sortie de ce modulateur est reliée à l'antenne d'émission 20. Le synthétiseur de fréquences 2 est également commandé par le circuit de commande 3 à partir de valeurs établies par un circuit générateur 4. Pour cela, ce circuit générateur génère deux suites de valeurs pseudo-aléatoires aux rythmes $T_V$ et $T_R$ respectivement associées à la loi de veille $L_V$ et à la loi de recherche de fréquence libre $L_R$, et disponibles sur deux sorties $S_V$ et $S_R$ de ce circuit. Ces sorties sont reliées à deux entrées de données correspondantes du circuit de commande 3.

Ce circuit de commande comporte en outre une entrée de commande reliée à un inverseur de position 5 pour la mise en position d'appel ou en position veille ou réception du poste. Le poste comporte en outre un détecteur d'appel 6 dont l'entrée est reliée à la sortie BF du démodulateur 11 et dont la sortie est reliée à une entrée de détection d'appel $D_A$ du circuit de commande, et un détecteur de signal 7 également relié à la sortie BF du démodulateur et dont la sortie est également reliée à une entrée du circuit de commande.

En position de veille, le commutateur d'émission-réception 1 est en position de réception, sauf pendant l'intervalle $t_2$ qui suit une détection d'appel et une écoute pendant $t_1$ à la fréquence $f_l$, lorsqu'un signal a été détecté à cette fréquence à la sortie du détecteur 7. Les fréquences d'écoute et d'émission sont établies par le synthétiseur 2 sur commande par le circuit de commande 3 à partir des valeurs associées à la loi de veille $L_V$ et à la loi de recherche de fréquence libre $L_R$.

En position d'appel, le commutateur est successivement en position de réception ou d'émission selon les différentes phases de la procédure d'appel et le résultat des tests réalisés, les fréquence d'écoute et d'émission y associées étant établies par le synthétiseur 2 sur commande par le circuit de commande 3.

Pour l'émission des séquences d'appel le poste comporte un générateur de messages d'appel 8 ayant une entrée de commande reliée à une sortie correspondante du circuit de commande et une sortie reliée à l'entrée BF du modulateur 21.

Dans un mode de réalisation de l'invention le circuit de commande comporte un microprocesseur et les éléments de mémoire de données et de programmes associés pour la mise en oeuvre du procédé d'établissement des communications décrit ci-dessus en référence aux séquences représentées sur les figures 2 et 3.

## Revendications

1. Procédé d'établissement des communications dans un réseau conférence de postes émetteurs-récepteurs à sauts de fréquence communiquant en alternat, caractérisé en ce que en position de veille les postes en écoute suivent une même première loi de fréquence, dite loi de veille, variant par sauts d'une manière pseudo-aléatoire; en ce que, à chaque alternat, le poste en position d'appel établit une séquence d'appel formée de messages d'appel émis en diversité de fréquence sur les paliers de cette loi de veille, et est placé, à la fin de cette séquence d'appel, en écoute sur la fréquence possible de trafic correspondant au palier en cours d'une seconde loi de fréquences semblable pour tous les postes, variant par sauts d'une manière pseudo-aléatoire, et synchronisée avec la première, la durée des paliers de la seconde loi étant multiple de celle des paliers de la loi de veille; en ce que les postes en position de veille ayant détecté au moins partiellement la séquence d'appel sont également placés, à la fin de cette séquence, en écoute sur la même fréquence possible de trafic pendant un intervalle de test de durée $t_1$, un poste ayant détecté un signal à cette fréquence pendant cette duree $t_1$ émettant pendant un intervalle de durée $t_2$ un signal de brouillage à cette même fréquence à destination des autres postes du réseau pour indiquer l'occupation de la fréquence correspondante et un poste n'ayant pas détecté de signal prolongeant l'écoute pendant le même intervalle de duree $t_2$; et en ce que le poste appelant émet de telles séquences d'appel suivies de phases d'ecoute sur des paliers de la seconde loi de fréquences jusqu'à ce qu'une fréquence possible soit libre, la communication étant établie pour le poste appelant par l'émission à cette fréquence de trafic et pour les postes appelés par l'écoute à cette même fréquence lorsqu'à la fin d'un intervalle de durée $t_2$, aucun poste n'a détecté de signal.

2. Procédé selon la revendication 1, caractérisé en ce que lors du passage en position d'appel d'un poste du réseau, à un instant où la seconde loi de fréquences est sur un palier d'indice I à la fréquence $f_I$, ce poste se place en écoute sur la fréquence possible de trafic $f_{I+1}$ associée au prochain palier de la seconde loi de fréquences jusqu'à la fin du palier en cours, la séquence d'appel étant émise sur le palier suivant de la seconde loi de fréquences seulement lorsqu'aucun signal n'a été reçu pendant la phase initiale sur la fréquence correspondante $f_{I+1}$, cette fréquence étant présumée libre.

3. Procédé selon l'une des revendications précédentes, caractérisé en ce qu'une séquence d'appel est formée d'une suite discontinue de messages brefs centrés par rapport aux paliers correspondants de la loi de veille.

4. Procédé selon la revendication 3, caractérisé en ce que, entre les messages d'une séquence d'appel, un poste en position d'appel se place en écoute sur la fréquence possible de trafic associée au prochain palier de la seconde loi de fréquences aour effectuer un test de présomption de liberté de cette fréquence, le résultat de ce test étant pris en compte lorsque la fréquence possible du palier en cours est trouvée occupée, pour déclencher ou non une séquence d'appel pendant le palier suivant de la seconde loi de fréquences.

5. Procédé selon l'une quelconque des revendications précédentes, caractérisé en ce que pendant une phase d'alternat, lorsque la communication est établie, le poste appelant et les postes appelés quittent la fréquence de trafic respectivement pour émettre et recevoir des messages de marquage à des fréquences données par les paliers de la loi de veille aux instants correspondants, la détection de ces messages indiquant que la communication continue et n'a pas été brouillée.

6. Poste émetteur-récepteur destiné à la mise en oeuvre du procédé selon l'une quelconque des revendications précédentes, caractérisé en ce qu'il comporte un circuit de commande (3), associé à un inverseur (5) de position appel-veille, ce circuit de commande ayant des entrées reliées aux sorties d'un générateur (4) de valeurs associées aux fréquences de la première et de la seconde loi de fréquences $L_V$ et $L_R$, à la sortie d'un détecteur d'appel (6) et à la sortie d'un détecteur de signal reçu (7), et des sorties de commande reliées à l'entrée de commande d'un commutateur d'émission-réception (1) et d'un synthétiseur de fréquences (2).

## Claims

1. Method of establishing communications in a conference network among transmitter-receiver stations operating with frequency jumping and communicating alternatingly, characterized in that, in the stand-by position, the listening stations follow the same first frequency law referred to as stand-by law and varying stepwise in pseudo-random manner; in that, upon each alternation, the calling station establishes a calling sequence formed of call messages transmitted with frequency diversity on the steps of this standby law, and, at the end of this calling sequence, is caused to monitor on the possible traffic frequency corresponding to the current step of a second frequency law similar for all the stations and varying stepwise in pseudo-random manner, and synchronized with the first, the duration of the steps of the second law being a multiple of that of the steps of the stand-by law; in that the stations in stand-by position having at least partially detected the calling sequence are likewise caused to monitor on the same possible traffic frequency at the end of this sequence and during a test interval of duration $t_1$, a station having detected a signal of this frequency during this duration $t_1$ transmitting during an interval of the duration $t_2$ a jamming signal on this same frequency to the other stations of the network to signal the occupation of the corresponding frequency, and a station not having detected any signal continuing to monitor during the same interval of duration $t_2$; and in that the calling station transmits such calling sequences followed by monitoring phases on steps of the second frequency law until a possible frequency is free, the communication being established for the calling station by transmission on this traffic frequency and for the called stations by receiving on this same frequency when no station has detected any signal at the end of an interval of the duration $t_2$.

2. Method according to claim 1, characterized in that, when a station of the network is switched to the calling position at a moment where the second frequency law is on a step of the index I and the frequency $f_I$, this station is caused to monitor on the possible traffic frequency $f_{I+1}$ associated with the following step on the second frequency law until the end of the current step, the calling sequence being transmitted on the following step of the second frequency law only when no signal was received during the initial phase on the corresponding frequency $f_{I+1}$ this frequency being supposed to be free.

3. Method according to any of the preceding claims, characterized in that a calling sequence is formed of a discontinuous sequence of short messages centered with respect to corresponding steps of the stand-by law.

4. Method according to claim 3, characterized in that, between the messages of a calling sequence, a station in the calling state causes itself to receive on the possible traffic frequency associated with the following step of the second frequency law to perform a presumption test whether this frequency is free, the test result being taken into account when the possible frequency of the current step is found to be occupied to activate or not a calling sequence during the following step of the second frequency law.

5. Method according to any of the preceding claims, characterized in that, during one phase of alternation and when the communication is established, the calling station and the called stations leave the traffic frequency to transmit and receive, respectively, marking messages on frequencies given by the steps of the stand-by law at the corresponding moments, the detection of these messages indicating that the communication continues and has not been disturbed.

6. Transmitter-receiver station for performing the method of any of the preceding claims, characterized in that it comprises a control circuit (3) associated with a calling/stand-by position changeover switch (5), this control circuit having inputs connected to the outputs of a generator (4) generating values associated with the frequencies of the first and the second frequency laws $L_V$ and $L_R$, to the output of a calling detector (6) and to the output of a received signal detector (7), and control outputs connected to the control inputs of a transmission-reception switch (1) and of a frequency synthesizer (2).

## Patentansprüche

1. Verfahren zur Herstellung von Verbindungen in einem Konferenznetz von Frequenzsprung-Sende/Empfängern, die alternierend miteinander in Verbindung stehen, dadurch gekennzeichnet, daß die empfangenden Stationen im Bereitschaftszustand einem ersten Frequenzgesetz folgen, das als Bereitschaftsgesetz bezeichnet wird und pseudozufällig sprungweise variiert; daß bei jedem Wechsel die rufende Station eine Rufsequenz aufbaut, die aus Rufnachrichten gebildet ist, welche mit Frequenz-Diversity auf den Stufen dieses Bereitschaftsgesetzes ausgesendet werden, und am Ende dieser Rufsequenz umgeschaltet wird auf Empfang der möglichen Verkehrsfrequenz, welche der laufenden Stufe eines zweiten Frequenzgesetzes entspricht, das für alle Stationen dasselbe ist und pseudozufällig sprungweise variiert sowie mit dem ersten synchronisiert ist, wobei die Dauer der Stufen des zweiten Gesetzes ein Vielfaches derjenigen der Stufen des Bereitschaftsgesetzes ist; daß die im Bereitschaftszustand befindlichen Stationen, welche die Rufsequenz wenigstens teilweise erfaßt haben, ebenfalls am Ende dieser Sequenz auf Empfang derselben möglichen Verkehrsfrequenz während eines Testintervalls der Dauer $t_1$ umgeschaltet werden, wobei eine Station, welche ein Signal auf dieser Frequenz während dieser Dauer $t_1$ erfaßt hat, während eines Intervalls der Dauer $t_2$ ein Störsignal auf dieser selben Frequenz zu den anderen Stationen des Netzes sendet, um die Belegung der entsprechenden Frequenz anzuzeigen, während eine Station, die kein Signal erfaßt hat, den Empfang während desselben Intervalls der Dauer $t_2$ verlängert; und daß die rufende Station diese Rufsequenzen gefolgt von Empfangsphasen auf den Stufen des zweiten Frequenzgesetzes aussendet, bis eine mögliche Frequenz frei ist, wobei die Verbindung für die rufende Station durch Aussenden auf dieser Verkehrsfrequenz und für die gerufenen Stationen durch Empfang auf dieser selben Frequenz hergestellt wird, wenn am Ende eines Intervalls der Dauer $t_2$ keine Station ein Signal erfaßt hat.

2. Verfahren nach Anspruch 1, dadurch gekennzeichnet, daß beim Übergang einer Station des Netzes in den Rufzustand zu einem Zeitpunkt, wo das zweite Frequenzgesetz sich auf einer Stufe mit dem Index I auf der Frequenz $f_I$ befindet, diese Station auf der möglichen Verkehrsfrequenz $f_{I+1}$, welche der nächsten Stufe des zweiten Frequenzgesetzes zugeordnet ist, bis zum Ende der laufenden Stufe auf Empfang geht, wobei die Rufsequenz auf der nächsten Stufe des zweiten Frequenzgesetzes nur dann ausgesendet wird, wenn keinerlei Signal während der Anfangsphase auf der entsprechenden Frequenz $f_{I+1}$ empfangen wurde, wobei diese Frequenz als frei angenommen wird.

3. Verfahren nach einem der vorstehenden Ansprüche, dadurch gekennzeichnet, daß eine Rufsequenz aus einer diskontinuierlichen Folge von kurzen Nachrichten gebildet wird, die in bezug auf die entsprechenden Stufen des Bereitschaftsgesetzes zentriert sind.

4. Verfahren nach Anspruch 3, dadurch gekennzeichnet, daß zwischen den Nachrichten einer Rufsequenz eine im Rufzustand befindliche Station auf der möglichen Verkehrsfrequenz, welche der nächsten Stufe des zweiten Frequenzgesetzes zugeordnet ist, auf Empfang geht, um eine Überprüfung der Annahme durchzuführen, daß diese Frequenz frei sei, wobei das Ergebnis dieser Überprüfung berücksichtigt wird, wenn die mögliche Frequenz der laufenden Stufe als besetzt angetroffen wird, um eine Rufsequenz während der darauffolgenden Stufe des zweiten Frequenzgesetzes auszulösen oder nicht auszulösen.

5. Verfahren nach einem der vorstehenden Ansprüche, dadurch gekennzeichnet, daß während einer Phase des Wechselbetriebs, wenn die Verbindung hergestellt ist, die rufende Station und die gerufenen Stationen jeweils die Verkehrsfrequenz verlassen, um Markiernachrichten auf Frequenzen, welche durch die Stufen des Bereitschaftsgesetzes gegeben sind, zu den entsprechenden Zeitpunkten auszusenden und zu empfangen, wobei die Erfassung dieser Nachrichten anzeigt, daß die Verbindung andauert und nicht gestört wurde.

6. Sende/Empfangsstation zur Durchführung des Verfahrens nach einem der vorstehenden Ansprüche, dadurch gekennzeichnet, daß sie eine Steuerschaltung (3) umfaßt, welcher ein Umschalter (5) für den Ruf/Bereitschafts-Zustand zugeordnet ist, wobei diese Steuerschaltung Eingänge aufweist, die mit den Ausgängen eines Generators (4) verbunden sind, welcher Werte erzeugt, die den Frequenzen des ersten und des zweiten Frequenzgesetzes $L_V$ und $L_R$ zugeordnet sind, mit dem Ausgang eines Rufdetektors (6) sowie mit dem Ausgang eines Empfangssignal-Detektors (7) verbunden sind, und Steuerausgänge aufweist, welche mit dem Steuereingang eines Sende/Empfangs-Umschalters (1) und einer Frequenzsyntheseschaltung verbunden sind.

Fig.1

Fig.2

Fig.3

Fig.4